# FASCICULE DE BREVET EUROPEEN

(11) **EP 0 983 922 B1**
(45) Date de publication et mention de la délivrance du brevet: **12.05.2004**
(21) Numéro de dépôt: 99401975.0
(22) Date de dépôt: 03.08.1999
(51) Int. Cl.: B61F 5/52, B61F 5/32, B61F 5/30

(54) **Bogie à longerons composites**
Drehgestell mit Komposit-Längsträgern
Bogie with composite girders

(30) Priorité: 02.09.1998 FR 9810981
(43) Date de publication de la demande: 08.03.2000
(73) Titulaire: ALSTOM Holdings, 75116 Paris (FR)
(72) Inventeur: Landrot, Alain, 71200 Le Creusot (FR)
(74) Mandataire: Jacobson, Claude

(56) Documents cités:
- EP-A- 0 547 010
- WO-A-96/08402
- FR-A- 2 244 656

## Description

L'invention concerne un bogie, notamment pour véhicule ferroviaire, destiné à supporter une charge telle que la caisse du véhicule ou un ensemble moteur, en appui sur plusieurs roues réparties sur des essieux.

Compte tenu de la masse supportée et de la vitesse de déplacement, les efforts dus aux accélérations, notamment lors des changements de direction, sont importants, et pour cette raison il est d'usage de réaliser les bogies sous la forme de pièces massives en acier ou de structures mécano-soudées. Ces pièces et ces structures sont lourdes (généralement entre 1300 et 1900 kg) et rigides et doivent être équipées de systèmes de suspension et d'amortissement pour assurer le confort des passagers du véhicule et l'absorption des vibrations dues aux irrégularités de la voie ferrée sur laquelle circule le véhicule ; il en résulte que, compte tenu des charges à l'essieu admises, la charge susceptible d'être embarquée dans la caisse est nécessairement limitée notablement.

Par la demande de brevet européen 0 031 008, on connaît un bogie de véhicule ferroviaire comprenant des parties de châssis en forme de H réalisées en matériau composite ; ces parties de châssis ne permettent ni d'absorber efficacement les efforts dus aux accélérations verticales et transversales des pièces en mouvement, ni de monter des éléments accessoires ou de sécurité tels qu'un moteur, un système de freinage ou un système de contrôle, car pour résister efficacement aux contraintes dynamiques engendrées, elles devraient avoir une section transversale importante, ce qui entraînerait une consommation importante de matière composite, majorerait le prix de revient des bogies et poserait des problèmes techniques de moulage ; de plus, avec cette conception, il est difficile d'obtenir un châssis présentant des caractéristiques de flexibilité identiques de part et d'autre du plan médian longitudinal du bogie.

L'invention a pour but dé remédier à ces inconvénients et de créer un bogie présentant une structure telle que les longerons participent efficacement à la suspension du véhicule tout en conservant une géométrie simple et un coût attractif améliorant les performances économiques globales du bogie.

A cette fin, l'invention concerne un bogie présentant les caractéristiques de la revendication 1.

Par exemple, et de préférence, le longeron est constitué d'une lame unique qui, étant élastique et interchangeable, constitue une suspension primaire paramétrable, et est fabriquée en matériau composite.

Grâce à ces caractéristiques, le longeron, qui assure à la fois les fonctions de supportage du véhicule entre les essieux, de suspension primaire du véhicule, d'amortissement des vibrations entre les essieux et le véhicule, et de guidage latéral des essieux, contribue à alléger le bogie par rapport aux structures classiques en acier, ce qui permet d'augmenter la charge embarquée sur le véhicule. La souplesse du matériau composite, par exemple à base de fibres de verre, de carbone ou d'aramide noyées dans une résine époxydique ou autre, lui permet de réaliser un amortissement efficace aux fréquences vibratoires le plus souvent actives dans un bogie. En outre, la géométrie du longeron peut être choisie de manière que sa fabrication soit simple. L'élément intercalaire, pouvant se déplacer longitudinalement par rapport au manchon de longeron et à la boîte d'essieu, permet d'absorber les écarts liés à la charge du véhicule et d'amortir le phénomène de galop du bogie.

Selon une caractéristique préférentielle de l'invention, l'élément intercalaire est un moyen amortisseur au moins partiellement en élastomère, par exemple en caoutchouc, et de préférence élastomère-métal, qui est sollicité en fonction des déformations élastiques de la lame élastique de longeron, et permet d'amortir avec celle-ci, les mouvements du bogie.

Selon une autre caractéristique avantageuse de l'invention, l'élément intercalaire amortisseur constitue un étage supplémentaire de suspension primaire, de paramétrage de rigidité de suspension.

Selon une autre caractéristique, en alternative, l'élément intercalaire est une pièce par exemple métallique, frottant sur un lisoir en tant qu'élément amortissant, ce qui permet d'équiper un bogie à meilleur coût lorsqu'il n'est pas nécessaire d'optimiser l'efficacité de la suspension.

Selon encore une autre caractéristique optionnelle de l'invention, le bogie comporte deux longerons comprenant chacun au moins une lame élastique de préférence monolithique, reliés à une même traverse de bogie ; il est possible de prévoir que chaque longeron soit relié à la traverse sous celle-ci, à la partie supérieure de la région centrale de la longueur de la lame, ce qui permet à cette traverse de supporter le véhicule en étant équipée de moyens de suspension secondaire.

D'autres caractéristiques et avantages de l'invention ressortiront de la description qui va suivre de formes de réalisation de l'invention données à titre d'exemples non limitatifs et illustrées par les dessins joints dans lesquels :
- la figure 1 est une vue schématique de côté d'un bogie selon l'invention,
- la figure 2 est une vue schématique en perspective de deux longerons et d'une partie d'une traverse de bogie appartenant à un bogie tel que celui de la figure 1,
- la figure 3 est une section schématique montrant le montage d'un longeron par rapport à une boîte d'essieu dans une première forme de réalisation de l'invention, et
- la figure 4 est une section schématique montrant le montage d'un longeron par rapport à une boîte d'essieu dans une deuxième forme de réalisation de l'invention.

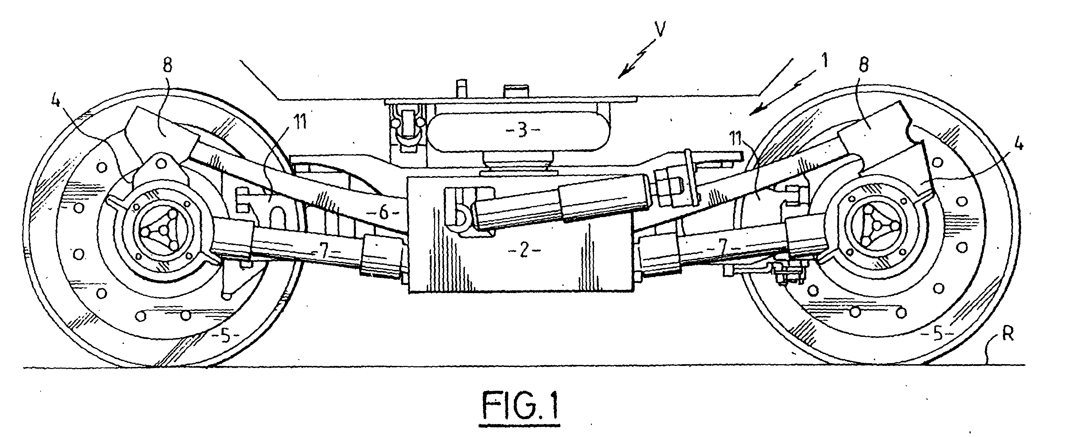

Le bogie 1 représenté sur la figure 1 est destiné à supporter un véhicule ferroviaire V, en appui sur des rails R dont un seul est visible sur la figure 1. Ce bogie 1 comprend une traverse 2 sur laquelle est disposé un ensemble de suspension secondaire 3 intercalé entre la traverse 2 et la caisse du véhicule V. La traverse 2 est supportée par l'intermédiaire notamment de boîtes d'essieu 4 pour au moins deux essieux qui y sont montés tournants, portant des roues 5. A cette fin, deux longerons 6 (dont un seul est visible sur la figure 1) sont fixés à la traverse 2 et liés aux boîtes d'essieu 4 d'une manière qui sera décrite plus précisément dans la suite, pour relier les essieux à une région au moins approximativement centrale de la longueur du bogie. Les boîtes d'essieu 4 sont de plus reliées à la traverse 2 par des bras longitudinaux 7.

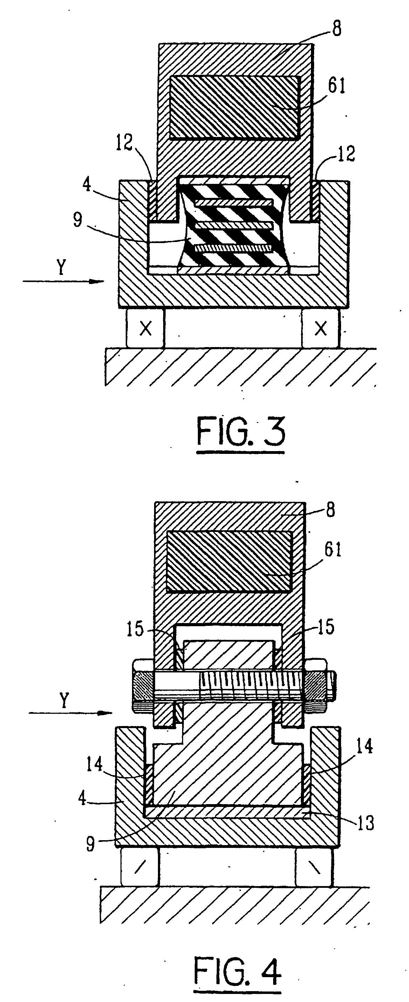

Les longerons 6 comprennent chacun au moins une lame élastique monolithique conformée de manière appropriée, de préférence arquée, qui est en fibres de verre, de carbone ou d'aramide noyées dans une matrice à base de résine époxydique ou autre ; ainsi, on obtient une structure légère et présentant d'excellentes propriétés mécaniques pour un prix de revient relativement faible; une région 61 de chaque extrémité de chaque longeron 6 disposé avec sa région centrale en bas, est logée dans un manchon 8 de longeron reposant sur une boîte d'essieu 4 respective par l'intermédiaire d'au moins un élément intercalaire 9 porté par la boîte d'essieu et portant le manchon de longeron (figures 3 et 4). Ici, chaque longeron 6 est constitué d'une unique lame élastique en matériau composite.

Les régions 61 du longeron 6 en matériau composite sont collées dans les manchons 8 de façon à réaliser un assemblage capable de s'appuyer sur les boîtes d'essieu 4. L'assemblage par collage est particulièrement adapté à un longeron en matériau composite, car le choix de la colle est alors effectué en fonction de ce matériau.

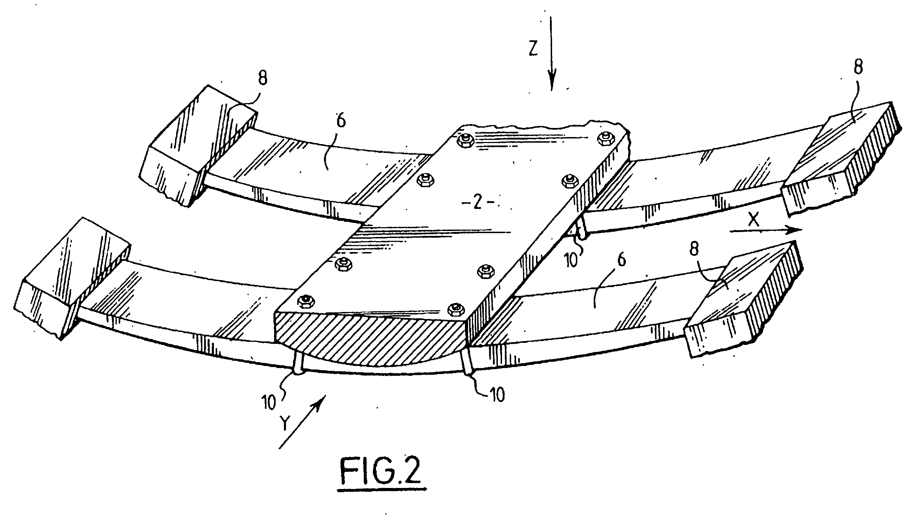

Les longerons 6 peuvent être fixés par tout moyen approprié, par exemple par des étriers 10 (figure 2), dans des rainures de la traverse 2, de telle sorte que celle-ci et les longerons 6 constituent un assemblage rigide dans la partie centrale de la longueur du bogie 1.

Les longerons 6 sont modélisés en tant que poutres arquées encastrées ici dans les rainures et maintenues au niveau des étriers 10, soumises à des efforts verticaux au niveau des régions 61 arquées des extrémités ; selon l'invention, la souplesse des lames, due à la nature du matériau choisi, est mise à profit pour leur faire assurer une fonction de suspension primaire par suite de leur déformation élastique le long de leur plage de débattement ; ainsi, les longerons contribuent largement à obtenir un amortissement efficace des éventuelles vibrations apparaissant entre les boîtes d'essieu 4 et la traverse 2, et ce par un élément intercalaire comme on le verra dans la suite.

Le choix d'un dispositif de fixation démontable de manière simple, permet l'interchangeabilité des longerons 6, de telle sorte que ceux-ci constituent une suspension primaire paramétrable ; de plus, les longerons peuvent être aisément appariés de telle sorte que le châssis présente des caractéristiques de flexibilité identiques de part et d'autre du plan médian longitudinal du bogie ; également, il est possible de réaliser aisément des bogies de différentes longueurs par le simple choix de la longueur des longerons.

Grâce à la géométrie du bogie, il est possible de fixer sur la traverse 2 des éléments annexes tels qu'un système de freinage 11 ou un dispositif de contrôle électronique ; également, dans le cas d'un bogie moteur, la traverse 2 peut supporter un moteur d'entraînement des roues 5 ; la structure générale simple du bogie selon l'invention comportant une traverse 2 et deux longerons 6 conformément à la représentation de la figure 2, permet d'atteindre un prix de revient particulièrement attractif, notamment pour un bogie partiellement en fibres de verre et résine époxyde.

Dans les formes de réalisations représentées respectivement sur les figures 3 et 4, les éléments qui se correspondent portent des références identiques.

Comme on l'a vu précédemment, les régions 61 des extrémités des longerons 6 en matériau composite sont logées chacune dans un manchon 8 porté par une boîte d'essieu 4 par l'intermédiaire d'au moins un élément intercalaire 9 qui repose en appui sur la boîte d'essieu ; par ailleurs, les boîtes d'essieu sont reliées à la traverse 2 du bogie par les bras 7, de préférence également en matériau composite, qui peuvent débattre librement sous les efforts verticaux (direction Z de la figure 2).

Dans les deux formes de réalisation, les boîtes d'essieux 4 et les essieux sont montés concentriquement par l'intermédiaire de roulements, et les boîtes d'essieux comportent une partie présentant, en section par un plan radial par rapport aux roues, une section en U dont les branches définissent entre elles un espace où est logé au moins partiellement l'élément intercalaire 9. Le manchon 8 présente également une section en U, disposé retourné par rapport au U de la boîte d'essieu et dont les branches définissent entres elles un espace où est logé partiellement l'élément intercalaire 9 ; naturellement, le U du manchon 8 a une âme dont la section présente des dimensions suffisamment grandes pour qu'une région 61 d'une extrémité du longeron puisse être logée dans une cavité qui y est creusée.

Dans la forme de réalisation de la figure 3, les branches du U du manchon 8 sont logées entre les branches du U de la boîte d'essieu 4, à une distance de celles-ci telle que puisse être ajustée entre chaque branche du U de la boîte d'essieu et la branche en vis-à-vis la plus proche du manchon, une plaquette 12 en matériau polyamide auto-lubrifié présentant un faible coefficient de frottement, par exemple le matériau connu commercialement sous le nom de Railco ou celui connu sous le nom d'Ertalon; dans cette forme de réalisation, l'élément intercalaire 9, qui peut être entièrement ou presque entièrement logé dans le volume compris entre les branches du U de la boîte d'essieu, est un bloc en élastomère (caoutchouc par exemple), ou de préférence un bloc constitué partiellement en élastomère et partiellement en un autre matériau (métal par exemple), assurant l'amortissement des vibrations et des déflexions du longeron provoquées par les mouvements du bogie tandis que le longeron lui-même assure un positionnement toujours correct dans la direction transversale (direction Y sur les figures 2 à 4). Un choix approprié de l'élément intercalaire, qui constitue, dans cette forme de réalisation, un étage supplémentaire de suspension primaire, en fonction de sa rigidité propre, permet de paramétrer la raideur verticale c'est-à-dire la rigidité de la suspension, ce qui donne la possibilité d'utiliser ce type de châssis indifféremment sur un bogie moteur ou un bogie porteur, grande vitesse ou non. Le bloc 9 est de préférence disposé entre des cales en contact respectivement avec le manchon 8 et la boîte d'essieu 4, et on peut noter que ce bloc et ces cales ne sont ni fixés entre eux, ni fixés au manchon ou/et à la boîte d'essieu, l'amplitude de leur mouvements pouvant être seulement limitée par des butées.

Dans la forme de réalisation de la figure 4, les faces extérieures des branches du U du manchon 8 sont également plus rapprochées l'une de l'autre que les faces intérieures des branches du U de la boîte d'essieu 4, mais les branches du U du manchon, généralement, ne sont pas ou sont en faible partie seulement dans le volume compris entre les branches du U de la boîte d'essieu par suite de contraintes dimensionnelles dues au montage de l'élément intercalaire 9 frottant sur un lisoir 13 métallique par exemple en acier. Dans cette forme de réalisation, l'élément intercalaire 9, par exemple lui-même un bloc métallique, présente une section en T retourné dont la branche horizontale est logée entre les branches du U de la boîte d'essieu 4, à une distance telle que puisse être ajustée entre chaque branche du U de la boîte 4 et la face d'extrémité en vis-à-vis de la branche horizontale du T retourné du bloc 9, une plaquette 14 en matériau à faible coefficient de frottement. De même, l'âme verticale du T retourné est logée entre les branches du U du manchon 8, à une distance telle que puisse être ajustée entre chaque branche du U du manchon et la face en vis-à-vis de cette âme, une plaquette 15 en matériau à faible coefficient de frottement. L'âme du T retourné est liée aux branches du U retourné du manchon au moyen d'un axe formant pivot traversant l'ensemble (y compris naturellement les plaquettes 15) de part en part.

## Revendications

1. Bogie (1) adapté pour être solidarisé en appui sur des roues (5), et comprenant au moins deux essieux de roues, au moins un longeron (6) allant des essieux à une partie au moins approximativement centrale de la longueur du bogie, et des boîtes d'essieu (4) dans lesquelles les essieux sont montés tournants, le longeron (6) comprenant au moins une lame élastique constituant une suspension primaire, en matériau composite à base de fibres noyées dans une résine, **caractérisé en ce que** la lame constituant le longeron est interchangeable de sorte que la suspension primaire est paramétrable et **en ce qu'** une région (61) de chaque extrémité du longeron est logée dans un manchon (8) de longeron reposant sur une boîte d'essieu respective par l'intermédiaire d'au moins un élément intercalaire (9).

2. Bogie selon la revendication 1, **caractérisé en ce que** l'élément intercalaire (9) est un moyen amortisseur au moins partiellement en élastomère pour amortir, avec la lame élastique, les mouvement du bogie (1).

3. Bogie selon la revendication 1, **caractérisé en ce que** l'élément intercalaire (9) est un moyen amortisseur, constituant un étage supplémentaire de suspension primaire, de paramétrage de rigidité de suspension.

4. Bogie selon la revendication 1, **caractérisée en ce que** l'élément intercalaire (9) est une pièce métallique frottant sur un lisoir (13) en tant qu'élément amortissant.

5. Bogie selon la revendication 1, **caractérisé en ce qu'**il comporte deux longerons (6) comprenant chacun au moins une lame élastique et reliés à une même traverse (2) de bogie.

## Claims

1. Bogie (1) designed to be rendered integral by being supported on wheels (5), and comprising at least two wheel axles, at least one sole bar (6) which extends from the axles to an at least approximately central part of the length of the bogie, and axle boxes (4) in which the axles are fitted such as to rotate, the sole bar (6) comprising at least one resilient plate which constitutes a primary suspension made of composite material based on fibres embedded in a resin, **characterised in that** the plate which constitutes the length is interchangeable such that the primary suspension can be parameterised, and **in that** a region (61) of each end of the sole bar is accommodated in a sole bar sleeve (8) which is supported on a respective axle box by means of at least one interposed element (9).

2. Bogie according to claim 1, **characterised in that** the interposed element (9) is a shock absorption means at least partially made of elastomer, in order, together with the resilient plate, to damp the movements of the bogie (1).

3. Bogie according to claim 1, **characterised in that** the interposed element (9) is a shock absorption means which constitutes an additional primary suspension stage, for parameterisation of the rigidity of suspension.

4. Bogie according to claim 1, **characterised in that** the interposed element (9) is a metal part which rubs on a bolster (13) as a shock-absorption element.

5. Bogie according to claim 1, **characterised in that** it comprises two sole bars (6), each comprising at least one resilient plate and being connected to a single bogie crosspiece (2).

## Patentansprüche

1. Drehgestell (1), welches zur gemeinsamen Abstützung auf Rädern (5) angepasst ist, und welches mindestens zwei Radachsen, mindestens einen von den Achsen zu einem wenigstens annähernd auf der mittleren Länge des Drehgestells liegenden Abschnitt verlaufenden Längsträger (6) und Achskästen (4) umfasst, in welchem die Achsen drehbar montiert sind, und wobei der Längsträger (6) mindestens einen elastischen Stab umfasst, der eine primäre Aufhängung bildet, und aus einem Verbundwerkstoff auf der Grundlage von Fasern besteht, die in einem Harz eingebettet sind, **dadurch gekennzeichnet, dass** der Stab, der den Längsträger bildet, auswechselbar ausgebildet ist, so dass die primäre Aufhängung parametrierbar ausgebildet ist, und dass ein Abschnitt (61) eines jeden Endes des Längsträgers in einer Buchse (8) des Längsträgers angeordnet ist, wobei die Buchse (8) auf einem Achskasten jeweils über mindestens ein Zwischenbauteil (9) aufliegt.

2. Drehgestell nach Anspruch 1, **dadurch gekennzeichnet, dass** das Zwischenbauteil (9) ein Dämpfungsmittel ist, das wenigstens teilweise aus einem Elastomer besteht, um mit dem elastischen Stab die Bewegungen des Drehgestells (1) zu dämpfen.

3. Drehgestell nach Anspruch 1, **dadurch gekennzeichnet, dass** das Zwischenbauteil (9) ein Dämpfungsmittel ist, das eine zusätzliche Stufe der primären Aufhängung und der Parametrierung der Steifigkeit der Aufhängung bildet.

4. Drehgestell nach Anspruch 1, **dadurch gekennzeichnet, dass** das Zwischenbauteil (9) ein metallisches Teil ist, welches mit einem Gleitstück (13) in Reibschlussverbindung als Dämpfungselement steht.

5. Drehgestell nach Anspruch 1, **dadurch gekennzeichnet, dass** es zwei Längsträger (6) beinhaltet, die jeweils mindestens einen elastischen Stab umfassen und an einer gleichen Traverse (2) des Drehgestells angelenkt sind.
